(19) Europäisches Patentamt
European Patent Office
Office européen des brevets

(11) **EP 3 495 138 B1**

(12) **EUROPEAN PATENT SPECIFICATION**

(45) Date of publication and mention
of the grant of the patent:
**17.03.2021   Bulletin 2021/11**

(21) Application number: **17206418.0**

(22) Date of filing: **11.12.2017**

(51) Int Cl.:
*B32B 7/12* *(2006.01)*          *B32B 15/08* *(2006.01)*
*B32B 27/08* *(2006.01)*         *B32B 27/28* *(2006.01)*
*B32B 27/32* *(2006.01)*         *B32B 27/34* *(2006.01)*
*B32B 27/36* *(2006.01)*         *B32B 3/26* *(2006.01)*
*A61J 1/00* *(2006.01)*

(54) **COMPOSITE PACKAGING FOIL**

ZUSAMMENGESETZTE VERPACKUNGSFOLIE

FEUILLE D'EMBALLAGE COMPOSITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.06.2019   Bulletin 2019/24**

(73) Proprietor: **Constantia Tobepal S.L.U.**
**26007 Logrono (ES)**

(72) Inventors:
• **Leon, Ivan**
**26006 Logrono (ES)**
• **Fernandez, Oscar**
**26007 Logrono (ES)**

• **Bezares, Pedro**
**26005 Logrono (ES)**
• **Aguado, Ramon**
**26002 Logrono (ES)**
• **Martin, Roberto**
**26007 Logrono (ES)**
• **Odriozola, Ibon**
**20730 Azpeitia (ES)**

(74) Representative: **Patentanwälte Pinter & Weiss OG**
**Prinz-Eugen-Straße 70**
**1040 Wien (AT)**

(56) References cited:
**EP-A1- 2 336 044**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present disclosure relates to a composite packaging foil for a childproof and/or senior friendly packaging, comprising a first layer having a first outer surface and a first inner surface, wherein the first layer imparts tear-inhibiting properties to the packaging foil, a second layer having a second outer surface and a second inner surface, wherein the second outer surface of the second layer is sealable against a mating surface, an inner layer arranged between the first inner surface of the first layer and the second inner surface of the second layer, wherein the packaging foil has at least one weakening zone in which the tear-inhibiting properties of the packaging foil are reduced by a plurality of perforations that are present in the first layer.

Further the present disclosure relates to a method for preparing a composite packaging foil having a first layer, a second layer and an inner layer, wherein the process comprises the following steps: providing a roller arrangement comprising a perforation roller and a counter-pressure roller, the perforation roller having a plurality of protrusions arranged in at least one protrusion zone on the outer surface of the perforation roller, providing a first film material that has tear-inhibiting properties and/or that imparts tear-inhibiting properties to the packaging foil, piercing a plurality of perforations into a first film material by passing the first film material through the perforation roller and the counter-pressure roller, providing the first film material to a laminating apparatus as the first layer, applying a laminating adhesive as the inner layer onto the first layer, laminating the second layer onto the laminating adhesive to form the composite packaging foil.

Packagings made of sealed packaging foils, especially flexible packagings such as flexible single portion packagings, are becoming increasingly popular in the pharmaceutical industry. Examples for such flexible packagings include sachets, stick-packs, strip-packs, flow-wraps or doy-packs. Pharmaceutical preparations in powder, granulate, liquid and paste form can be packaged in a user-friendly, single-dose format and are optimally protected against moisture, oxygen, and light. Stick packs, for example, are not only convenient for the customers but also offer benefits to the producer in the form of sustainability and cost efficiency.

Especially in the pharmaceutical industry there is a need for packaging solutions that also provide childproof properties, which should prevent a child from accidently opening the package. Still the package should be easy to open for the adult user. A similar aspect is the senior friendliness of a packaging, i.e. it should be possible to open the packaging without undue physical effort and the package should open in a defined way.

Finding proper solutions for these demands is a challenging task, as the provision of any opening helps must not interfere with the normal barrier function of the packaging. Providing an opening function that is very easy to handle can compromise child-safety and making the opening too difficult would render it less senior friendly or could even make it impossible for some groups of customers to open the packaging manually.

EP 1345753 B1 discloses the formation of micro-perforations in only one layer of a multilayer film to provide a help for controlled tearing. The perforations formed in the film have an effective aperture of less than 25 $\mu$m. The perforations have a spacing of less than 500 $\mu$m.

EP 2336044 A1 discloses a child resistant blister pack with a sheet material having a plurality of zones of weakening. Each of the zones of weakening are formed by a plurality of microperforations. The sheet material can be a multilayer sheet material, wherein only one layer has the microperforations.

It is a goal of the invention to provide products and methods to make packagings, especially childproof and/or senior friendly packagings, more convenient for the user and to reduce the necessary amount of material.

The inventive objectives are achieved by are childproof and/or senior friendly packaging according to independent claim 1.

In a first aspect the present disclosure addresses a composite packaging foil of the aforementioned type, wherein the density of perforations in the weakening zone lies between 50 and 250, preferably between 50 and 150 and particularly preferred between 70 and 130 perforations per cm$^2$. The inventors found, that especially in connection with a layer that provides tear-inhibiting properties, this surprisingly low density of perforations sufficiently reduces the tear-resistance only in the weakening zone to allow an easy opening in this area only while maintaining the tear-resistant properties in the other areas.

The current disclosure addresses a composite packaging foil, wherein in section planes parallel to the first outer surface the cross sections of the perforations have an elongated shape with a length and a width, wherein the dimension of the length is larger than the dimension of the width. The elongated cross-section form of the perforations facilitates the production.

In an advantageous embodiment, in section planes parallel to the fist outer surface the cross section of the perforations have an elongated (for example ellipsoidal, trapezoidal or the like) shape with a length and a width, wherein a maximum length lies between 50 $\mu$m and 600 $\mu$m, preferably between 100 $\mu$m and 500 $\mu$m and particularly preferred between 100 $\mu$m and 250 $\mu$m. Perforations of this lengths are still small enough to be mostly invisible for the normal user, nonetheless they provide for a strong reduction of the tear-resistance in the weakening zone, even at the given low density of perforations. Preferably (but not necessarily) all perforations in the weakening zone have essentially the same properties, i.e. that differences only being caused by production variations or wear. The maximum length can be at any plane parallel to the first outer surface, commonly (but not necessarily) the maximum length will be found in the section plane defined by the first outer surface or by the section plane defined by the first inner surface.

In an advantageous embodiment the length of the perforations are arranged along a desired tearing direction. This allows for defining a preferred tear direction, which generally runs parallel to the longitudinal extension of the perforations.

A ration of length to width that lies between 2 and 5, preferably between 2.5 and 3.5, was found to allow for a good balancing of a good tearability versus a good structural stability of the packaging foil.

In an advantageous embodiment the first layer can comprise polyethylene terephthalate PET, polypropylene and/or polyamide, such as nylon. Generally all materials that provide very high tearing resistance can be used for the first layer. These materials enable the formulation of a packaging foil that - apart from the weakening zones - cannot be torn by an ordinary user without utilising a tool. The first layer can either consist of the material or the first layer can be a multi-layered film or extrudate which comprises the material in one or more of the layers.

In an advantageous embodiment the first layer can comprise a biaxially or monoaxially oriented film. This allows for a further adjustment of the properties of the packaging foil, for example in terms of tensile strength, stability, rigidity, tearing resistance, tear propagation in specified directions and/or optical characteristics.

In an advantageous embodiment the thickness of the first layer can lie in a range between 8 and 30 $\mu$m, preferably between 12 and 23 $\mu$m. In conjunction with the selection of a specific material, the desired tear-resisting properties can be realised in this range.

In an advantageous manner the second layer can comprise an aluminium foil, preferably an aluminium foil having a thickness that lies in a range of between 6 $\mu$m and 40 $\mu$m, particularly preferred between 6.35 $\mu$m and 30 $\mu$m. Aluminium foils provide excellent barrier properties against moisture, oxygen and light.

According to another advantageous embodiment the second layer can comprise a layer of a polyolefin material, particularly polyethylene or polypropylene, or a hot sealable lacquer, which provides the second outer surface. This advantageously provides for the sealability of the second outer surface against a mating surface and/or against itself. The second layer can be a multi-layered film having a barrier material (e.g. an aluminium foil) coated with a sealable material on the side that forms the second outer surface.

In an advantageous embodiment the inner layer can comprise a wet or dry lamination adhesive or an extrusion lamination adhesive. This allows for the use of lamination techniques (adhesive lamination and extrusion lamination) which are widely known in the field. With extrusion lamination a molten polymer thin is used as the adhesive material.

In a further aspect a childproof and/or senior friendly packaging made using an aforementioned composite packaging foil is disclosed. The packaging can be produced by well-known techniques used in the field of packaging industry, e.g. by forming the package with a part of the packaging foil, filling the form, sealing the form on the edges and cutting the form into the proper size of the packaging.

In an advantageous embodiment the packaging can be a sachet, a stick-pack, a strip-pack, a flow-wrap or a doy-pack. All of these packaging products can be easily produced with the inventive packaging foil and advantageously be provided with the inventive features.

According to another advantageous embodiment at least one weakening zone can be arranged in a continuous manner, wherein the weakening zone can be oriented longitudinally or transversally with regard to the machining direction of a packaging production line. For the production of a packaging foil having a continuous weakening zone for such a packaging simple and durable roller arrangements can be used.

In another advantageous embodiment at least one weakening zone can be arranged in a discontinuous manner and longitudinally or transversally oriented with regard to the machining direction of a packaging production line. The thus reduced area of the weakening zone can be used to define tearable areas in well selected regions so that it can be made very difficult to open the packaging for children, while at the right location the packaging can still be opened with ease by an adult user.

According to another advantageous embodiment at least two weakening zones can be arranged, preferably in a symmetrical manner, on a front side and a backside of the Packaging so that the packaging can be opened in different orientations.

In another embodiment the packaging can provide a push-through opening feature or a tear-open opening feature, which allows for a consumer friendly and childproof packaging. The packaging can also provide a push-through opening feature and a tear-open opening feature in combination, which facilitates the usability.

To make the packaging even more childproof it can be provided that at least one opening feature can only be accessible after at least a partial separation of one compartment of the packaging, for example by separating the compartment along a perforation line.

In a further aspect the present document discloses a method of the aforementioned type, wherein the density of the protrusions in the protrusion zone lies between 50 and 250, preferably between 50 and 150 and particularly preferred between 70 and 130 protrusions per cm$^2$.

In an advantageous embodiment the protrusions on the perforation roller can be manufactured using a process selected from chemical etching, laser etching, knurling, mechanical insertion of protrusions or combinations of these processes. The production of the perforation roller is facilitated by the low protrusion density.

According to another advantageous embodiment the cross section of the protrusions has an elongated form, wherein a ratio of length to width preferably lies between 2 and 5, particularly preferred between 2.5 and 3.5. This increases the stability of the protrusions, reduces maintenance times and increases total life of the perforation rollers.

In an advantageous embodiment the tip surface of the protrusions has a length (L') of between 100 $\mu$m and 250 $\mu$m, preferably between 100 $\mu$m and 150 $\mu$m and a width (B') of between 10 $\mu$m and 120 $\mu$m, preferably between 15 and 60 $\mu$m, wherein the height of the protrusion preferably lies in a range between 150 $\mu$m and 250 $\mu$m.

In an advantageous embodiment the counter-pressure roller has a coating of an elastomer material.

In another advantageous embodiment at least one protrusion zone is arranged circumferentially around the surface of the perforation roller.

In a further advantageous embodiment the roller arrangement can be provided in a printing line or in a lamination line. This allows for the manufacture of the inventive packaging foil using a common printing machine or lamination machine. The method for piercing the material can be combined with a printing procedure or integrated into the lamination procedure.

The invention will further be described in terms of non-restricting examples of preferred embodiments, which are given in connection with the accompanying drawings, wherein

Fig.1 shows a schematic representation of a packaging foil according to the invention,

Fig. 2 shows a schematic representation of the form of a protrusion which can be used in an inventive method,

Fig. 3 shows an embodiment of the inventive packaging foil in a schematic sectional view,

Fig. 4a-4d show a packaging according to the invention in form of a sachet,

Fig. 5a-5d show a packaging according to the invention in form of a stick-pack,

Fig. 6a-6i show a packaging according to the invention in form of a strip-pack,

Fig. 7a-7d show a packaging according to the invention in form of a flow-wrap,

Fig. 8a-8b show a packaging according to the invention in form of a doy-pack,

Fig. 9 shows a schematic representation of production line for producing the inventive packaging foil,

Fig. 10 shows a schematic representation of a packaging foil to be teared open after folding,

Fig. 11 shows a schematic representation of a sealed packaging with a sealed rim comprising a weakening zone,

Fig. 12 shows the form of a test specimen for testing the initiating force for rupturing a film product,

Fig. 13 shows how the test specimen of Fig. 12 is clamped into an uniaxial tensile-test machine.

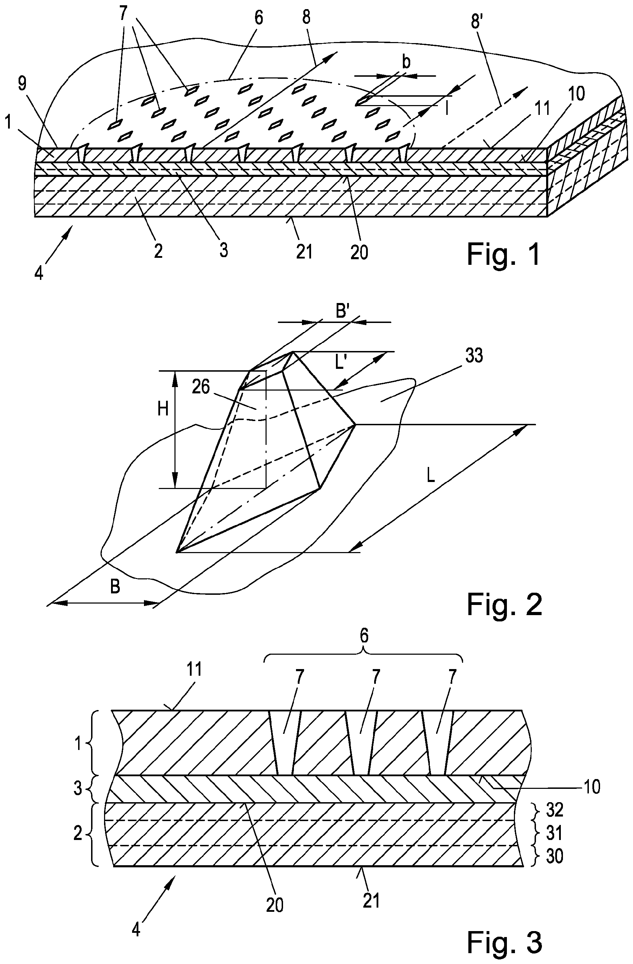

Fig. 1 and 3 show schematic representations of an inventive packaging foil 4. The packaging foil 4 is a multi-layered composite foil comprising at least three layers, a first layer 1, having a first outer surface 11 and a first inner surface 10, a second layer 2 having a second outer surface 21 and a second inner surface 20 and an inner layer 3 arranged between the first inner surface 10 of the first layer 1 and the second inner surface 20 of the second layer 2.

All figures, especially the schematic representations in fig. 1, 2, 3 and 9, are not drawn to scale. Some features and/or dimensions and/or thicknesses are exaggerated or decreased for reasons of clarity and identifiability only and in a non-restricting manner.

The inner layer 3 preferably is an adhesive layer bonding the first and second layers together. Any suitable bonding and adhesive techniques that are known to the person skilled in the art can be used for producing this layer, for example wet and dry adhesives or extrusion lamination resins which are well known in the field.

The first layer 1 imparts tear-inhibiting properties to the packaging foil 4, i.e. this layer comprises or consists of a material with high tear strength, e.g. polyethylene terephthalate (PET), polypropylene, polyamide and/or nylon, some other material that is known for its high static or dynamic loading capacity, combinations of these materials or combinations of these materials combined with other materials. The first layer 1 can be provided as a single- or multi-layered film, wherein the film or single layers of this film can be biaxially or monoaxially oriented to increase the strength of the material and/or influence the tearing behaviour in one or more tearing directions.

The second layer 2 preferably has a barrier function, for example against light, fluids, moisture, steam or gases like oxygen or air. The functions of the second layer 2 and the respective materials of the second layer 2 are selected to fit to the product that should be packed with the packaging foil 4. The second layer 2 can consist of one material or it can comprise more layers of the same or different materials. The second layer 2 and/or one or more single layers of the second layer 2 can further be biaxially or monoaxially oriented. Nonetheless, as oriented films normally increase the tear resistance, for many applications it is preferred that the second layer 2 consists of non-oriented material, to not (or only insignificantly) interfere with the tearing properties of the packaging foil.

To provide a sealability of the packaging foil 4 the second layer 2 can consist of sealable material or the second layer 2 can have a sealable layer 30 on its second outer surface 21. Sealable material can be any material that can be sealingly attached to a mating surface by pressure and/or heat or other sealing technique such as ultrasound sealing. Examples of sealable materials comprise thermoplastic polymers, e.g. from the group of polyolefins, particularly polyethylene or polypropylene, or hot sealable lacquer, e.g. heat-seal-lacquer systems that are known to the skilled practitioner.

The second layer 2 can be a single material layer or it can consist of multiple layers. The example shown in fig. 1 and 3 comprises a multi-layered second layer 2, having a sealable layer 30, a barrier layer 31 and a printing layer 32. The sealable layer 30 provides the abovementioned sealability on the second outer surface 21. The barrier layer 31, which preferably can be an aluminium layer, provides for the barrier function. The printing layer 32 implements the packaging design and can be seen from the side of the fist outer surface 11 through the (in this case transparent) first layer 1 and middle layer 3.

As the case may be, the printing layer 32 can also be provided on the first inner surface 10 or on the first outer surface 11 of the first layer 1.

According to the invention, some areas of the packaging foil 4 can be defined as weakening zones 6. While it is normally not possible to tear the intact packaging foil 4 by hand, within the weakening zones 6 it is possible to start tearing the packaging foil 4. Once the packaging foil 4 has been ruptured in the weakening zone 6, it can be possible to continue tearing the packaging foil 4 also in the areas outside the weakening zone 6.

In the weakening zone 6 the first layer 1 comprises a number of perforations 7 that are provided in a regular pattern. According to the invention the density of the perforations 7 in the weakening zone 6 lies between 50 and 250, preferably between 50 and 150 and particularly preferred between 70 and 130 perforations per cm$^2$ (with regard to the fist outer surface 11).

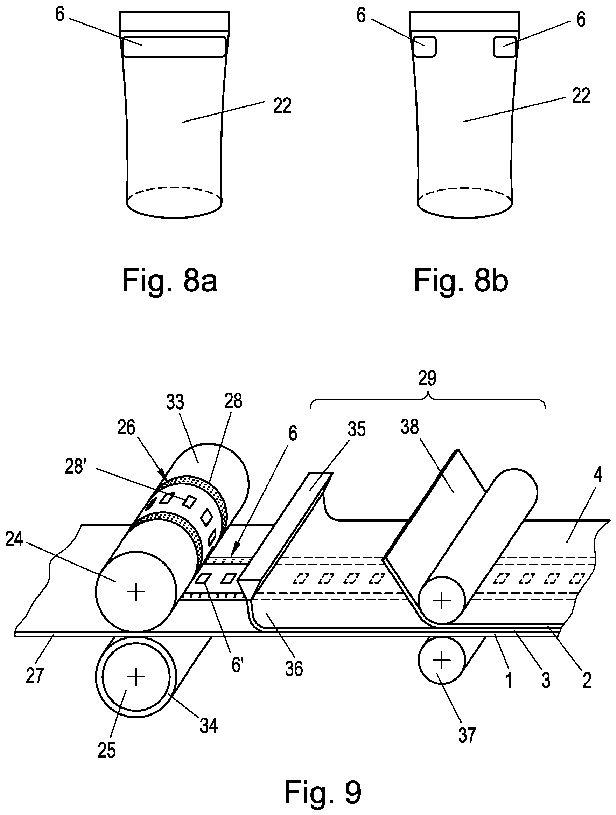

The perforations 7 can be introduced into the first layer 1 before laminating the first layer 1 and the second layer 2 with the inner layer 3. A preferred way of introducing the perforations 7 is by piercing each perforation 7 with a protrusion 26 (for example in the form of a needle or tip), which is schematically shown in fig. 2. The protrusion 26 can be provided on a top surface 33 of a perforation tool, for example a perforation roller 24 (fig. 9) that comprises a plurality of protrusions 26. Preferably the protrusions 26 have a longitudinal shape with respect to a section plane that is parallel to the surface 33 (or traverse to the height H of the protrusion 26, respectively). The cross section in such a section plane can have a longitudinal shape, for example an oval or rhomboid form. In fig. 2 the cross section of the protrusion 26 in form of a rhombus can be seen for the basis of the protrusion, where it has length L and a width B, and for the tip of the protrusion, where it has a smaller length L' and width B'. The ratio of length L, L' to width B, B' is substantially constant for all cross sections and has a ratio that preferably lies between 2 and 8, particularly preferred between 3 and 6, and most preferably can be about 5. In an exemplary embodiment the tip surface of the protrusions can have a length L' of between 100 $\mu$m and 250 $\mu$m, preferably between 100 $\mu$m and 150 $\mu$m and a width B' of between 10 $\mu$m and 120 $\mu$m, preferably between 15 and 60 $\mu$m. The Height H of the protrusion preferably lies in a range between 150 $\mu$m and 250 $\mu$m. In other embodiments the protrusions 26 can have a circular section, for example in the case when needles are used for the production of the perforation roller 24. The form of the protrusions is defined by nominal dimensions, the actual dimensions of the protrusions can differ from these nominals dimensions due to production variances or wear.

Correspondingly the perforations that are pierced with such a protrusion 26 essentially have a cross section that corresponds to the cross section of the protrusion 26 and also has substantially the same ratio of length l and width b (fig. 1). The size of the perforations can be regulated by production parameters, for example by controlling a contact pressure or by design of a counter pressure-roller 25 (which will be further explained below). In the embodiment shown in fig. 1 and 3 the perforations 7 were introduced into the first layer 1 (that is into the film material that was used for manufacturing this layer) from the first outer surface 11, so that the cross section of the perforation 7 has its maximum size at the outer surface 11. It should be noted that this is not a compulsory feature, as it would also be possible to produce the perforations 7 in a way that the maximum size is on the first inner surface 10 or between the first inner surface 10 and the first outer surface 11, which both lies in the scope of the present disclosure.

In preferred embodiments the maximum length l of the cross section of the perforations 7 lies in a range between 50 $\mu$m and 600 $\mu$m, preferably between 100 $\mu$m and 500 $\mu$m and particularly preferred between 100 $\mu$m and 250 $\mu$m.

It is preferred that the longitudinal extent (i.e. the length l) of the perforations 7 are all arranged in parallel directions, which defined the preferred tearing direction 8.

Fig. 9 shows in a schematic manner the fundamental steps of a method and apparatus for producing an inventive packaging foil 4.

A fist film material 27, intended to form the first layer 1 of the packaging foil 4, is passed through a roller arrangement comprising a perforation roller 24 and a counter-pressure roller 25. On the outer surface of the perforation roller 24 a plurality of protrusions 26 is arranged in protrusion zones 28. Fig. 9 shows two protrusion zones 28 that are arranged circumferentially around the surface of the perforation roller 24.

The protrusions 26 have a shape and configuration as described above. Particularly the density of the protrusions 26 in the protrusion zone 28 lies between 50 and 250, preferably between 50 and 150 and particularly preferred between 70 and 130 protrusions per $cm^2$. The cross section of the protrusions 26 has an elongated form, for example a form as described above and shown in fig. 2. The protrusions 26 on the perforation roller 24 can be manufactured for example by using a process selected from chemical etching, laser etching, knurling, insertion of needles or tips or combinations of these processes.

The counter-pressure roller 25 has a coating of an elastomer material 34 which allows the protrusions 26 to completely penetrate the layer of the first film material 27 and reduces the wear and tear of the roller arrangement. According to the circumferential arrangement of the protrusion zone 28 the roller arrangement produces two weakening zones 6 in the first film material 27 that are parallel to the feed direction of the first film material 27. Nonetheless the protrusion zones 28 can be arranged in any suitable form on the surface 33 of the perforation roller 24. For example in Fig. 9 additional protrusion zones 28' are arranged on the surface 33 that have a rectangular shape and therefore produce rectangular weakening zones 6' in the first film material 27. The form, arrangement and size of the weakening zones 6 are defined by the properties of the packaging that shall be produced by the packaging foil and can be chosen by a skilled practitioner.

The perforation roller arrangement can preferably be installed in the printing line, so that the introduction of the perforations is included in the printing process. Before (or after) the perforation roller arrangement one or more printing layers can be applied on the first film material 27. In another embodiment the perforation roller arrangement can be implemented in the laminating line, as it is shown in Fig. 9.

The first film material 27 is then fed to a laminating apparatus 29 comprising an application unit 35 for an adhesive 36 and then to a pressure roller arrangement 37, in which a second film material 38 is laminated to the first film material 27 via the adhesive 36. The packaging foil 4 produced in this way comprises the first film material 27 with the weakening zones 6 as a first layer 1, the second film material 38 as the second layer 2 and the adhesive 36 as the third layer 3. As an adhesive 36 also an extrusion-lamination material can be used, for example a hot (i.e. melted) thin film of a polyolefin, preferably polyethylene.

The term "adhesive", as it is used in this disclosure, should be interpreted in a broad sense and designates any material that can be used for laminating two layers.

To provide childproof and/or senior friendly properties to a packaging, the tear resistance of the "normal" packaging foil 4 (i.e. without the perforations 7 in the weakening zone 6) must be high enough to make it impossible for an ordinary user to open the package by tearing up the packaging foil 4 by hand.

To date there is no common standard or analytical method for measuring a tearing force. Such method would have to take into account the complex system and usage of the human hand and the very different conditions of the hands of infants, children, adults and elderly people. For these reasons to date there exist no machine or apparatus that would be capable to simulate the opening by hand in a suitable, reproducible and quantifiable manner. Therefore there is no official definition of when a package foil is child resistant that would be based on a measured tearing force.

The properties of a given product packaging are therefore normally tested by expert panels; for example the Consumer Product Safety Commission (CPSC) is carrying out such tests for the US territory to determine the child resistance and senior friendliness of a package. As the force that has to be imposed on a foil edge 9 (or a folded edge 14 or a sealed edge 12 of a packaging 5, respectively) of a packaging foil 4 to tear up the foil is very subjective, the definition of the child resistance and senior friendliness is normally based on empirical studies done with the help of test persons. For example tests can be conducted with small children between 42 to 51 months and senior citizen between 50 to 70 years as a basis for the CPSC certification.

Similar boards and standards exist for numerous countries and areas, for example the U.S. Consumer Product Safety Commission (16 CFR, part 1700), the Environmental Protection Agency (40 CFR, part 162), Canadian standards (CSA Z76.1 & Z76.2), European standards (EN8317 & EN14375) and International standard (ISO 8317).

For example in Europe the packaging certification of pharmaceutical products is done in compliance with the ISO 8317 for reclosable and EN 14375 for non-reclosable packages: To test child-resistance, infants aged 42 to 51 months will be asked twice to open the package for a five minute period (without and with a demonstration of the opening procedure). The certification requirements are fulfilled if, within the first five minutes, no more than 15 percent of the children manage to open the package and no more than 20 percent of children access the contents of the package throughout the entire ten minute period.

Generally the tearability of a given packaging foil 4 can be defined for a foil edge 9, a folded edge 14, or sealed edge 12 of two packaging foils 4 that are sealed together, for example along a sealed rim 13 of a packaging 5.

With the packaging foil 4 shown in fig. 1, for example, it is possible to produce a rupture in the direction of the illustrated arrow (which depicts the tearing direction 8) by firmly gripping the foil edge 9 in the weakening zone 6 and tearing it in a shearing movement. Once the rupture has started in the weakening zone 6, it can be possible to continue it into the area outside the weakening zone 6 without undue effort. On the other hand it is not possible to grip the foil edge 9 and tear the packaging foil 4 in an area outside the weakening zone 6, for example along the arrow 8' shown in a dashed line.

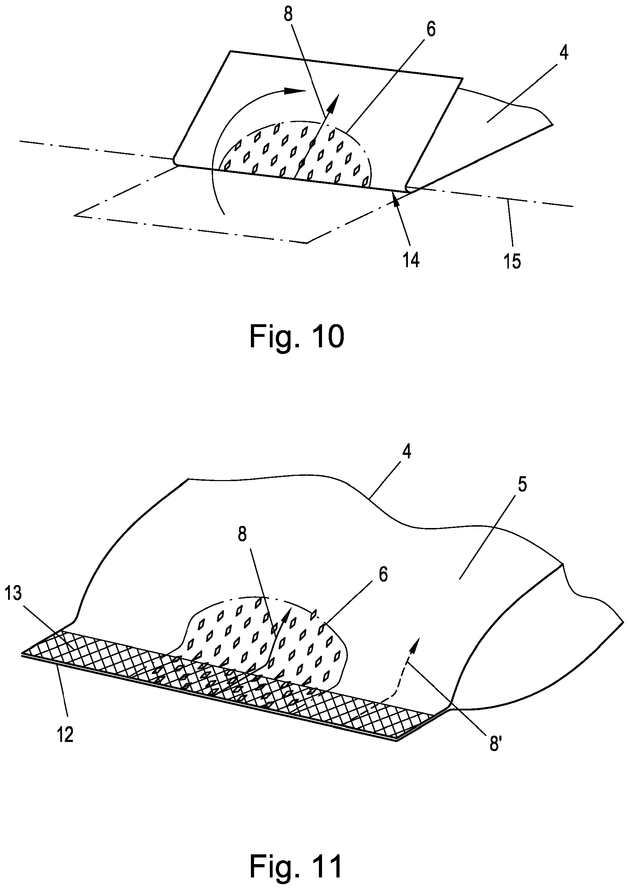

If the weakening zone 6 is not provided on the foil edge 9 and is only present on a distinct surface area inside the surface of the packaging foil 4, it is still possible to produce a rupture in the packaging foil 4 by folding an edge 14 along a folding line 15 that crosses the weakening zone 6, gripping the folded edge 14 and tearing the so produced double layer of the packaging foil 4 along a tearing direction 8. Such a tearing open which starts on a folding edge 14 is exemplarily and schematically shown in fig. 10.

Fig. 11 shows a part of a packaging 5 made using the inventive packaging foil 4. Along a sealed rim 13 two layers of the packaging foil 4 are sealed together forming a sealed edge 12. The weakening zone 6 encompasses a part of the sealed rim 13 and extends to the sealed edge 12. Preferably a respective weakening zone also extends on the opposite side of the packaging. The packaging 5 can be opened by gripping the sealed rim 13 in the area of the weakening zone 6 and tearing it open along the tearing direction 8 (but again it is not possible to tear up the package 5 along the dashed line of arrow 8').

In all these examples the tearing properties can be defined by choosing the materials, thicknesses and mechanical treatments of the layers of the packaging foil 4. While the tearing properties of a packaging foil 4 are also influenced by the properties and combination of the inner layer 3 and the second layer 2, the properties of the first layer 1 are predominantly defining the overall tearing properties. According to a preferred embodiment the first layer 1 can comprise (or consist of) at least one layer of polyethylene terephthalate (PET), polypropylene, polyamide and/or nylon, preferably with a thickness in a range between 8 and 30 $\mu$m, preferably between 12 and 23 $\mu$m, for example 12, 19 or 23 $\mu$m.

In experiments performed by the inventors several packaging foils 4 where tested. As a fist layer 1 polyethylene terephthalate (PET) films with a thickness of 12, 19 and 23 $\mu$m where used. The packaging foils 4 where tested manually and proved very good results, especially when the first layer 1 was provided as a biaxially or monoaxially oriented film.

Packaging foils 4 with such a first layer 1 where tested in combination with different inner layers 3 and second layers 2, which all proved good tear-inhibiting properties. For example as the second layer 2 an aluminium/polyethylene foil was used which was laminated to the PET-film either by adhesive lamination or by extrusion lamination with a thin film of molten polyethylene. The samples could be comfortably torn open in the weakening zones 6 which were prepared with the inventive features described above.

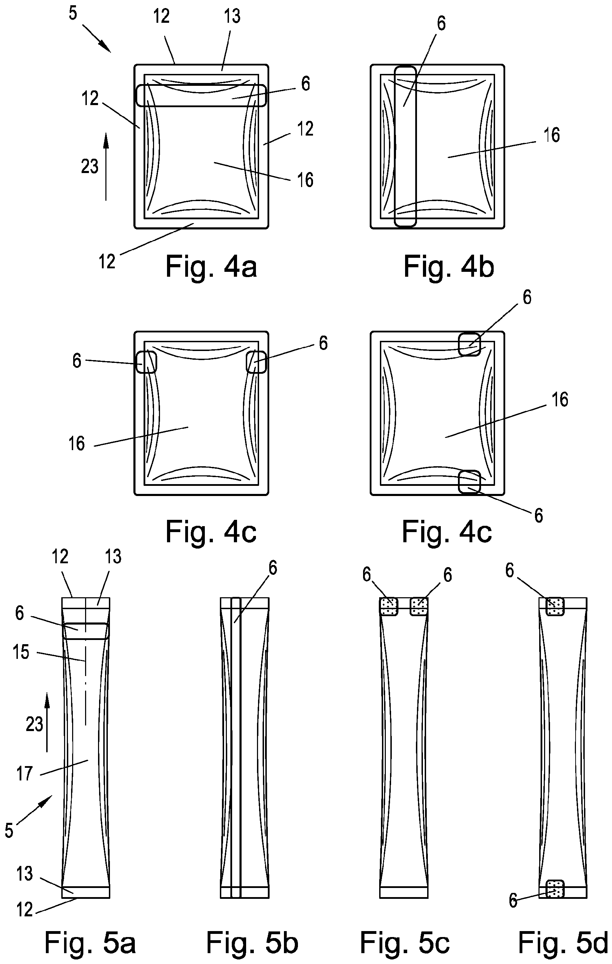

In fig. 4 to 8 exemplary embodiments of inventive childproof packagings 5 are shown.

Fig. 4a-4d all show packagings 5 in the form of a sachet 16, having weakening zones 6 arranged on different positions. The sachet 16 is a small packaging unit, usually containing one single portion of a product, and it essentially consist of two rectangular sheets of the packaging foil 4 which are sealed together along their edges 12 with a sealed rim 13. The weakening zones 6 are preferably arranged on the front side and the backside of the packaging.

Fig. 4a shows a sachet 16 having a weakening zone 6 extending transversally across the sachet 16. The weakening zone 6 extends across the whole width of the sachet 16 in a continuous manner. The sachet 16 can be opened by tearing open the sachet 16 from one lateral edge 12 to the opposite lateral edge 12 along the weakening zone 6.

Fig. 4b shows a sachet 16 having a weakening zone 6 extending longitudinally along the sachet 16. The weakening zone 6 extends along the whole length of the sachet 16 in a continuous manner. The sachet 16 can be opened by tearing open the sachet 16 from one upper (or lower) edge 12 to the opposite lower (or upper) edge 12 along the weakening zone 6.

Fig. 4c shows a sachet 16 having a weakening zone 6 being split up into two distinct areas, each being arranged on a same height of the sachet 16 but on opposite edges 12 of the sachet 16, i.e. the weakening zone 6 extends transversally across the sachet 16 in a discontinuous manner. The sachet 16 can be opened by tearing open the sachet 16 from one lateral edge 12 in one of the weakening zones 6 and then further tearing open the sachet 16 in the area outside of the weakening zone 6 along the upper edge of the sachet 16.

Fig. 4d shows a sachet 16 having a weakening zone 6 being split up into two distinct areas, each being arranged on a same distance from the lateral edge of the sachet 16 but on opposite upper and lower edges 12 of the sachet 16, i.e. the weakening zone 6 extends longitudinally across the sachet 16 in a discontinuous manner. The sachet 16 can be opened by tearing open the sachet 16 from the upper or lower edge 12 in one of the weakening zones 6 and then further tearing open the sachet 16 in the area outside of the weakening zone 6 along the lateral edge of the sachet 16.

In this disclosure the terms "longitudinally" and "transversally" refer to a machining direction 23 of a packaging production line, in which the respective packaging 5 was produced. The production and filling apparatus are well known to the skilled person.

Fig. 5a-5d all show packagings 5 in the form of a stick-pack 17, having weakening zones 6 arranged on different positions. The stick-pack 17 is a small elongated packaging unit, usually containing one single portion of a product. It essentially consist of one rectangular sheet of the packaging foil 4 which is rolled into an elongated form and sealed together along a longitudinal sealing line, which is arranged on the back of the stick-pack 17.

To close the stick-pack 17, the elongated form is sealed on the upper and lower edges 12 with a sealed rim 13.

Fig. 5a shows a stick-pack 17 having a weakening zone 6 extending transversally across the stick-pack 17. The weakening zone 6 extends across the whole width of the stick-pack 17 in a continuous manner. The stick-pack 17 can either be opened by tearing open the stick-pack 17 from the longitudinal seal (not shown) on the backside of the stick-pack 17 and tear open the stick-pack 17 along the weakening zone 6, or by folding the packaging foil 4 of the stick-pack 17 along a folding line 15, that traverses the weakening zone 6, and tearing open the stick-pack 17 by tearing up the so produced folded edge.

Fig. 5b shows a stick-pack 17 having a weakening zone 6 extending longitudinally along the stick-pack 17. The weakening zone 6 extends along the whole length of the stick-pack 17 in a continuous manner and preferably is also continuous on the backside of the stick-pack 17. The stick-pack 17 can be opened by tearing open the stick-pack 17 from one upper (or lower) edge 12 to the opposite lower (or upper) edge 12 along the weakening zone 6, or by folding the packaging foil 4 of the stick-pack 17 in the area of the weakening zone 6 and tearing up the so produced folded edge.

Fig. 5c shows a stick-pack 17 having a weakening zone 6 being split up into two distinct areas, each being arranged on a same height of the stick-pack 17 but on distinct surface areas of the stick-pack 17, i.e. the weakening zone 6 extends transversally across the stick-pack 17 in a discontinuous manner. The stick-pack 17 can be teared open by folding the packaging foil 4 of the stick-pack 17 in the area of the weakening zone 6 and tearing up the so produced folded edge. Then the stick-pack 17 can be further open by prolonging the rupture in the area outside of the weakening zone 6, for example along the upper edge of the stick-pack 17.

Fig. 5d shows a stick-pack 17 having a weakening zone 6 being split up into two distinct areas, each being arranged on a same distance from the lateral edge of the stick-pack 17 but on opposite upper and lower edges 12 of the stick-pack 17, i.e. the weakening zone 6 extends longitudinally across the stick-pack 17 in a discontinuous manner. The stick-pack 17 can be opened by tearing open the stick-pack 17 from the upper or lower edge 12 in one of the weakening zones 6 and then further tearing open the stick-pack 17 in the area outside of the weakening zone 6 along the lateral edge of the stick-pack 17.

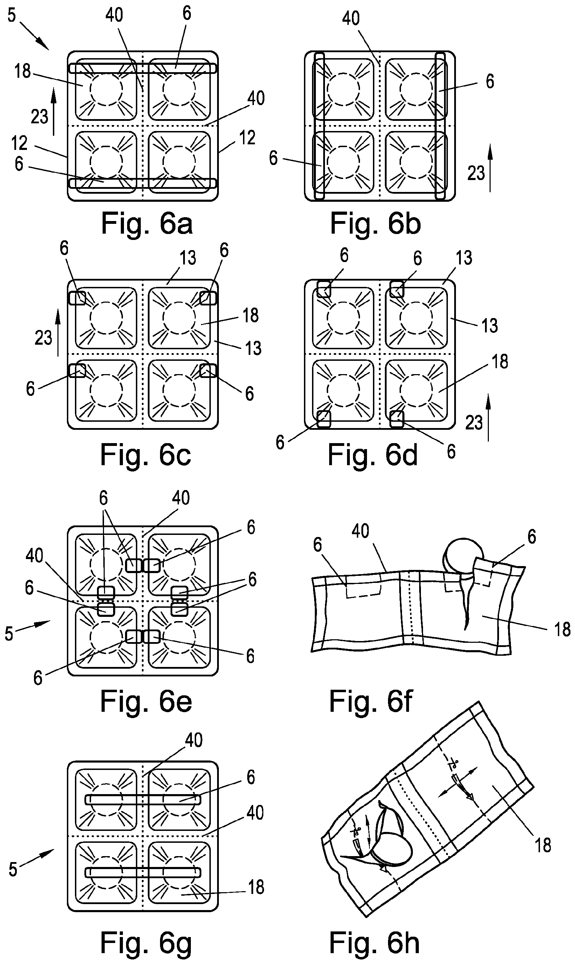

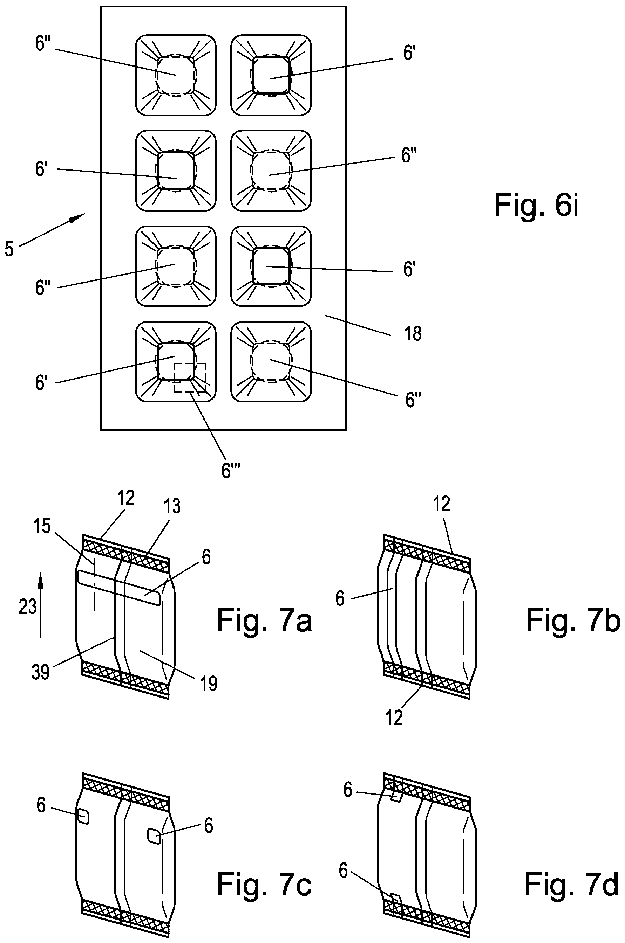

Fig. 6a-6i all show packagings 5 in the form of a strip-pack 18, having weakening zones 6 arranged on different positions. The strip-pack 18 is a flat packaging 5 consisting of two sheets of packaging foil 4 which are sealed together in a grid-like pattern of sealing areas, which produces separate compartments that each hold one unit of the product, for example an effervescent tablet, pill, oblong pill or the like. Along the grid-like pattern the packaging compartments can be separated from each other by perforation lines 40, along which the compartments can be easily torn apart and separated from each other. The strip-packs 18 shown in Fig. 6a-6h comprise four compartments, but it is obvious that the strip-pack 18 could be larger and comprise a higher number of compartments. For example in Fig. 6i a strip pack (for example for smaller pills) is shown having 8 compartments. In any case the respective weakening zones 6 must be arranged in a pattern that allows an opening of each compartment, at least after it has been separated.

Fig. 6a shows a strip-pack 18 having two weakening zones 6 extending transversally across the strip-pack 18, each weakening zone 6 crossing the area of at least two compartments. The weakening zones 6 extend across the whole width of the strip-pack 18 in a continuous manner. The strip-pack 18 can be opened by tearing open the strip-pack 18 from one lateral edge 12 to the opposite lateral edge 12 along the weakening zone 6. A single compartment that has been separated from the strip pack 18 by tearing apart the compartments along the horizontal and/or vertical perforation lines 40 can be opened in the same way.

Fig. 6b shows a similar strip-pack 18 having weakening zones 6 extending longitudinally along the strip-pack 18, i.e. parallel to a machining direction 23. The weakening zones 6 can, for example, be produced by a perforation roller arrangement having a perforation roll 24 with a protrusion zones 28 that are arranged circumferentially around the surface of the perforation roller 24 (as it has already been described in connection with Fig. 9). Although the production methods of the strip-packs 18 of fig 6b and 6a can be quite distinct from each other, from the view of the user there is no difference in handling of the strip-pack 18.

Fig. 6c shows a strip-pack 18 having weakening zones 6 being split up into distinct areas, each being arranged on one compartment of the strip-pack 18. The weakening zones 6 can be arranged on the vertical (i.e. parallel to the machining direction 23) sealing rims 13 of the grid pattern (transversally discontinuous - Fig. 6c) or on the horizontal sealing rims 13 (longitudinally discontinuous - Fig. 6d).

Fig. 6e shows another strip-pack 18 having weakening zones 6 that are arranged next to the perforation line 40. There are no weakening zones 6 in the area of the outer rim of the strip-pack 18. Therefore it is not possible to tear open the compartments starting at the outer rim. This provides for a two-step opening: first the compartment has to be separated by tearing it apart along perforation line 40. Only then the weakening zone 6 is accessible and the compartment can be ripped open.

Two adjacent weakening zones 6 on opposite sides of one (horizontal or vertical) perforation line 40 can also be considered as one weakening zone 6 that crosses the perforation line 40. In Fig. 6e two weakening zones 6 are shown on each compartment of the strip pack, as the weakening zones 6 are arranged on both the horizontal and the vertical perforation lines 40 between each pair of adjacent compartments. Nonetheless it is obvious that only one weakening zone 6 is necessary on each compartment. Therefore it would be sufficient to arrange the weakening zones 6 only on the horizontal perforation line 40 or only on the vertical perforation line 40. The required way of opening can be explained to the customer by written and/or pictorial instructions printed on the packaging foil (this feature essentially applies to all packaging products described herein).

Fig. 6f shows how a strip-pack 18 according to the embodiment shown in Fig. 6e can be opened after the strip-pack 18 has been divided along the perforation line 40.

Fig. 6g shows another strip-pack 18 having weakening zones 6 that stretch across two adjacent compartments and cross the (vertical) perforation line 40. It should be noted that the ends of the weakening zones 6 of this embodiment do not extend into the outer sealing areas, which means that the packaging cannot be ripped open starting from the outer rim. Similar to the embodiment shown in Fig. 6e the weakening zone 6 is only accessible after the compartment has been separated after tearing apart the respective perforation line 40. Nonetheless this embodiment also provides for an additional opening mechanism: The product in the compartment can be pushed through the packaging foil in the area at the end of the weakening zone 6. A push-through-method is very secure as children are normally not able to carry out the necessary movements, which are quite complex and also require some power. In this embodiment the push-through opening option is combined with the tearing open starting from the perforation line 40. Both procedures provide strong childproof features to the packaging.

Such a push-through is shown in Fig. 6h in an exemplary representation. Whether a push-through is possible with a specific combination of packaging foil, packaging form, packaged product and parameter of the weakening zone can be assessed with the help of routine tests by the skilled practitioner, who is aware of the teachings of this document.

A push-through feature can also be provided with other embodiments, for example the embodiments shown in Fig. 6a and 6b, by arranging the weakening zones 6 in an area closer to the middle of the compartment, i.e. in an area overlapping with the position of the packaged product (which can for example be a tablet, pill, oblong pill or the like). This embodiment allows for a combination of both opening mechanisms, the push-through feature and the tear-open feature, in one product. Such a strip-pack 18 could be opened either in the way shown in Fig. 6f, or in the way shown in Fig. 6h.

It is obvious that the push-through opening option can also be implemented as the only option that is offered for the compartment. In this case the weakening zone 6 would not be extended to the perforation line 40. Fig. 6i shows an elongated strip-pack 18 implementing such a feature. The strip-pack 18 of Fig. 6i comprises eight compartments, each containing one piece of the product. It should be noticed that the strip-pack 18 of Fig. 6i has no perforation lines 40 that would separate the compartments, i.e. the compartments cannot be separated by hand. Each compartment has one weakening zone 6, which is arranged approximately in the middle of the compartment in the area, where the product is held. In this way the packaged product in one compartment can only be unpacked by pushing it through the packaging foil in the area of the weakening zone 6. Preferably (but not necessarily) the weakening zone 6 of every compartment is arranged only on one side of the packaging (i.e. only on the front side or backside of the strip-pack 18) so that the product can only pushed through to one side. In a further embodiment the weakening zones 6 of one strip-pack 18 can be arranged alternating on the front side and the backside of the strip-pack 18. For example a first group of the weakening zones 6 in Fig. 6i can be arranged on the front side of the strip-pack 18 (designated in the figure as weakening zones 6') and a second group of the weakening zones 6 can be arranged on the back side of the strip-pack 18 (designated in the figure as weakening zones 6").

Although the weakening zones 6 for the push-through feature are shown in Fig. 6i in a position essentially in the centre of each compartment, the weakening zones 6 can also be arranged in an eccentrical position (still overlapping with the packaged product), so that the push-through can only be accomplished by pushing through a specific edge of the product. Such an embodiment is schematically outline in Fig. 6i by weakening position 6"'.

It should be noted that the push-through feature can be implemented with any packaging 5, for example with sachets, stick-packs, flow-wraps, doy-packs or other packagings, if the packaged product is sufficiently solid and has a form that allows to use it for a push-through.

Fig. 7a-7d all show packagings 5 in the form of a flow-wrap 19, having weakening zones 6 arranged on different positions. The flow-wrap 19 is a pouch-like packaging unit which is produced by folding a continuously fed strip of the packaging foil 4 into a tube form and sealing its longitudinal edged together along a longitudinal seal 39. The flow-wrap 19 is then filled and sealed by transversal sealing rims 13 in a continuous process.

Fig. 7a shows a flow-wrap 19 having a weakening zone 6 extending transversally across the flow-wrap 19. The weakening zone 6 extends across the whole width of the flow-wrap 19 in a continuous manner. The flow-wrap 19 can either be opened by tearing open the flow-wrap 19 from the longitudinal seal of the flow-wrap 19 and tear open the flow-wrap 19 along the weakening zone 6, or by folding the packaging foil 4 of the flow-wrap 19 along a folding line 15, that traverses the weakening zone 6, and tearing open the flow-wrap 19 by tearing up the so produced folded edge.

Fig. 7b shows a flow-wrap 19 having a weakening zone 6 extending longitudinally along the flow-wrap 19. The weakening zone 6 extends along the whole length of the flow-wrap 19 in a continuous manner. The flow-wrap 19 can be opened by tearing open the flow-wrap 19 from one upper (or lower) edge 12 to the opposite lower (or upper) edge 12 along the weakening zone 6.

Fig. 7c shows a flow-wrap 19 having a weakening zone 6 being split up into two distinct areas, each being arranged on a same height of the flow-wrap 19 but on opposite sides of the flow-wrap 19, i.e. the weakening zone 6 extends transversally across the flow-wrap 19 in a discontinuous manner. The flow-wrap 19 can be opened by tearing open the flow-wrap 19 in one of the weakening zones 6 and then further tearing open the flow-wrap 19 in the area outside of the weakening zone 6 along the upper edge of the flow-wrap 19.

Fig. 7d shows a flow-wrap 19 having a weakening zone 6 being split up into two distinct areas, each being arranged on a same distance from the lateral edge of the flow-wrap 19 but on opposite upper and lower edges 12 of the flow-wrap 19, i.e. the weakening zone 6 extends longitudinally across the flow-wrap 19 in a discontinuous manner. The flow-wrap 19 can be opened by tearing open the flow-wrap 19 from the upper or lower edge 12 in one of the weakening zones 6 and then further tearing open the flow-wrap 19 in the area outside of the weakening zone 6 along the lateral edge of the flow-wrap 19. Especially in the embodiments of Fig. 7b and 7d it is preferred that weakening zones are also arranged on the backside of the packaging in a symmetrical manner, to facilitate the opening manipulation.

Fig. 8a-8b both show packagings 5 in the form of a so called doypack 22, which is a packaging 5 made of a packaging foil 4 and having a bottom fold and a particular outlay of stiffening welds which create a stand up packaging. Fig. 8a shows a doypack 22 having a weakening zone 6 extending transversally and continuously across the doypack 22 and fig. 8b shows a doypack 22 having a weakening zone 6 extending transversally and discontinuously along the doypack 22.

The features described in conjunction with the description of Fig. 4-8 can be combined and amended in numerous ways to produce childproof and/or senior friendly packaging solutions for a broad field of applications that use packaging foils 4.

Due to the special features of the inventive packaging foil 4 it is not possible to tear open the packaging 5, apart from the places defined by the weakening zones 6. As the weakening zones 6 are almost invisible to the eye the packaging 5 can be provided with printed guidance how to open the package. For example the weakening zones 6 can be marked in a different colour and a printed folding line 15 can instruct the user to fold and tear the packaging 5 in the area of the weakening zone 6. Weakening zones 6 can be provided on the front and on the back of a packaging 5 and on every spot where the packaging should be openable by tearing open or by push-through. The form and/or position of the weakening zones 6 can be selected according to the needs and requests of the providers and the scope of this discloser is not limited to the specific embodiments and the forms and positions detailed in the drawings.

The inventors found that to date no adequate method is available to test the tear-initiation force of a packaging foil. Existing tear initiation tests involve the use of complicated testing machines that are required to pull apart two ends of a (usually rectangular) test specimen in a rather complex, for example arch-shaped movement. Testing machines that are able to produce such a movement are expensive and therefore not available in many development departments.

Alternatively the empirical tests referenced above can be used for testing the childproof features of a product. Nonetheless these tests are costly and time-consuming and therefore are not useful especially in the early stages of development. Also it is often not possible to characterize and categorize different products or raw or intermediate products, like different films and foils, independent of their usage on a standard basis based on readily measurable properties.

Therefore the inventors have developed a novel test specimen and method for testing the tear initiation force, which can be carried out using rather simple testing machines, for example universal uniaxial pull-test machines that are readily available in most development departments.

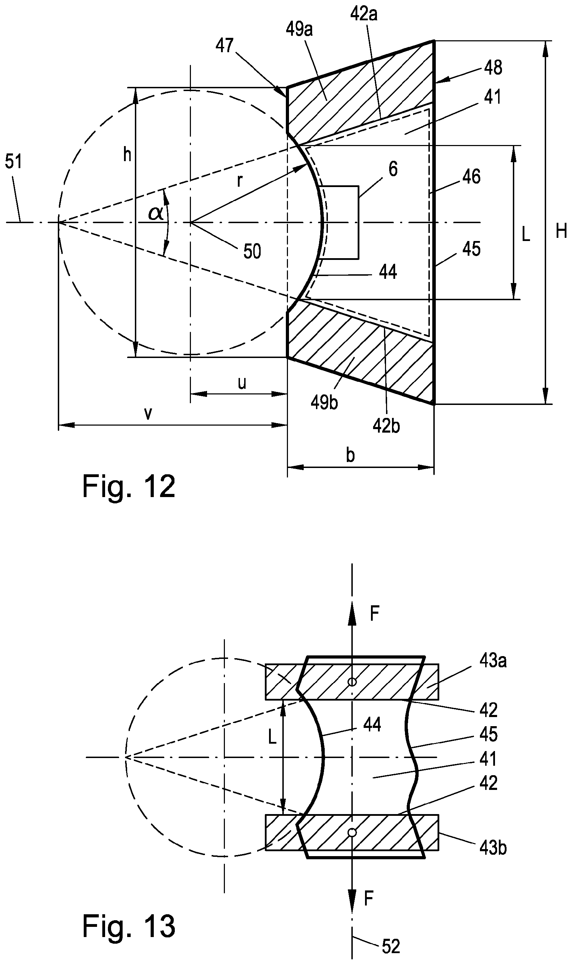

An example of the form of the test specimen 41 is shown in Fig. 12. The test specimen 41 consists of a cut of the foil or film to be tested. The test specimen 41 has an essentially trapezoidal shape with a maximum width b, a height h of a shorter side margin 47 and a height H of a longer side margin 48.

The test specimen 41 has an upper clamping area 49a and a lower clamping area 49b. Between the both clamping areas 49a and 49b a test area 46 (dashed line) is defined by an upper pinch line 42a (defining the border between the upper clamping area 49a and the test area 46), a lower pinch line 42b (defining the border between the lower clamping area 49a and the test area 46), a tear edge 44 on the side of the shorter side margin 47 and a slack edge 45 opposite to the tear edge 44 on the side of the longer side margin 48. The tear edge 44 is formed in the shorter side margin 47 by a circular cut having a radius r and a centre point 50, and the longer side margin 48 contains the slack edge 45.

The circular cut should be produced in a very high quality, as the inventors found that micro-serrations that can occur with scissor-cuts or razor-cuts can have a negative effect on the quality and reproducibility of the test results. Therefore the circular cut should preferably be produced with a cutting die tool, as for example a steel-rule-cutter of the like.

The upper pinch line 42a and the lower pinch line 42b are arranged under a pinch angle $\alpha$. The linear distance between the intersection point of the first pinch line 42a and the tear edge 44 and the intersection point of the second pinch line 42b with the tear edge 44 defines the clamping length L of the jaws 43 (Fig. 13) of a pull-test machine.

According to the depiction in Fig. 12 the form of the (flat) test specimen can be defined by the following parameters: maximum width b; first height H; second height h; clamping length L; radius r; pinch angle α; distance u between the centre point 50 and the shorter side margin 47; distance v between the intersection point of the pinch lines 42a and 42b and the shorter side margin 47. The definition is based on the specification that the test specimen 41 is symmetrically with regard to a middle axis 51, which is arranged in a right angle to the shorter side margin 47.

For the pull-test the upper clamping area 49a and the lower clamping area 49b of the test specimen 41 are clamped into the clamping jaws 43a, 43b of a pull-test machine, so that the upper pinch line 42a is flush with the upper clamping jaw 43a and the lower pinch line 42b is flush with the lower clamping jaw 43b.

As the slack edge 45 is longer than the clamping length L on the side of the tear edge 44, and as the upper and lower clamping jaws 43a, 43b are parallel, the slack edge 45 is deformed in a wavelike pattern. When the upper and lower jaws of the pull-test machine move outwards (in a pull direction 52) starting with the clamping length L, the tear force therefore only acts on the tear edge 44, while the slack edge 45 is still slack and does not get strained. The pull-test can be done in a usual manner. While the jaws move apart along the pull direction 52, a tear force F is measured and the result is printed on a force-path diagram (or stress-strain diagram, as the case may be). The maximum force is reached, when the test specimen rips in the area of the tear edge 40. In the diagram this point characterises the tear-initiation force of the test specimen 41 (i.e. of the foil of film material the test specimen was made of).

With the above described method and test specimen the inventors were able to reproducibly measure a tear-initiation force for different packaging foils.

## Case Example

For a test series a packaging foil was produced having a first layer of PET with a thickness of 12 μm, a second layer consisting of an aluminium foil (12μm) coated with extruded Surlyn (23 g/m2). The first and second layers were laminated with extrusion lamination using an inner layer of extruded PE (12 g/m2) as an extrusion adhesive, which resulted in a packaging foil according to the following structure:

PET 12 μm / PE extr. 12 g / Alu 12 μm / Surlyn extr. 23 g

For the example tests specimens of this packaging foil were produced according to Fig 12 having a clamping length L of 50 mm.

Before lamination weakening zones 6 where introduced into the first layer, the weakening zones having a rectangular shape with a continuous length and width of 8 mm. The weakening zone 6 was produced according to the above referenced method. In the weakening zones the perforation roller had protrusions with density of 112.5 protrusions per cm2. The tip surface of the protrusions has a nominal length of 180 μm and a nominal width of 60 μm. The nominal height of the protrusion was 180 μm. The protrusions of the perforation roller where produced by etching according to techniques known in the art.

A first group of test specimens was produced from the packaging foil, the test specimen being arranged in a way that the tear edge 44 passes through one weakening zone 6 in the area of the middle axis 51 of the specimen (as shown in Fig. 12).

A second group of test specimens with identical form was produced from the same packaging foil but cut out from an area having no weakening zone 6.

For each group three measurements were taken with a pull speed of 200 mm/min. For the first group (with the weakening zone 6) tear-initiation forces of 34.76, 29.39 and 30.10 N where measured, which gives an average tear-initiation force of 31.42 N.

For the second group (without a weakening zone 6) tear-initiation forces of 190.04, 190.01 and 163.88 N where measured, which gives an average tear-initiation force of 181.31 N.

From the results a Percentage of Tear-Initiation Force Reduction (%TIFR) was calculated according to the following formula:

$$\%TIFR = ((FNP - FP)/FNP) \times 100\ \%$$

with

FNP = Force needed to initiate the tearing in the non-perforated material in N

FP = Force needed to initiate the tearing in the perforated material in N

The %TIFR of the test example was 82,6 %.

This implies that the tear-initiation force could be reduced by 82,6 % by the weakening zone.

These findings confirm the practical tear-tests (performed by manually tearing open the packaging). The inventors assume that a %TIFR of more than 40 %, preferably more than 50 % and especially more than 60 % is adequate for most tear inhibiting packaging foils that are used in the field to allow for a manual tear-up opening of the package. It is therefore a feature of the disclosed packaging foil, that the tear-initiation force of the packaging foil is reduced in the area of the weakening zone by more than 40 %, preferably more than 50 % and particularly preferred by more than 60 %.

List of references:

first layer 1
second layer 2
inner layer 3
packaging foil 4
packaging 5
weakening zone 6
perforations 7
tearing direction 8
foil edge 9
first inner surface 10
first outer surface 11
sealed edge 12
sealed rim 13
folded edge 14
folding line 15
a sachet 16
stick-pack 17
strip-pack 18
flow-wrap 19
second inner surface 20
second outer surface 21
doypack 22
machining direction 23
perforation roller 24
counter-pressure roller 25
protrusions 26
first film material 27
protrusion zone 28
laminating apparatus 29
sealable layer 30
barrier layer 31
printing layer 32
top surface 33
elastomer material 34
application unit 35
adhesive 36
pressure roller arrangement 37
second film material 38
longitudinal seal 39
perforation line 40
test specimen 41
pinch line 42
jaw 43
tear edge 44
slack edge 45
test area 46
shorter side margin 47
longer side margin 48
upper clamping area 49a
lower clamping area 49b
centre point 50
middle axis 51
pull direction 52

**Claims**

1.  A packaging (5) suitable for being used as childproof and/or senior friendly packaging made using a composite packaging foil (4), wherein the packaging is a sachet (16), a stick-pack (17), a strip-pack (18), a flow-wrap (19) or a doypack (22), the composite packaging foil (4) comprising:

> - a first layer (1) having a first outer surface (11) and a first inner surface (10), wherein the first layer (1) imparts tear-inhibiting properties to the packaging foil (4),
> - a second layer (12) having a second outer surface (21) and a second inner surface (20), wherein the second outer surface (21) of the second layer (2) is sealable against a mating surface,
> - an inner layer (3) arranged between the first inner surface (10) of the first layer (1) and the second inner surface (20) of the second layer (2),

wherein the packaging foil (4) has at least one weakening zone (6) in which the tear-inhibiting properties of the packaging foil (4) are reduced by a plurality of perforations (7) that are present in the first layer (1), wherein the density of perforations (7) in the weakening zone (6) lies between 50 and 250, preferably between 50 and 150 and particularly preferred between 70 and 130 perforations per $cm^2$ and wherein the at least one weakening zone (6) is arranged on the packaging (5) to provides a push-through opening feature or a tear-open opening feature.

2.  A packaging (5) according to claim 1, wherein in section planes parallel to the first outer surface (11) of the composite packaging foil (4) the cross sections of the perforations (7) have an elongated shape with a length (l) and a width (b), wherein the dimension of the length (l) is larger than the dimension of the width (b), in particular wherein a maximum length (l) of a cross section of the perforations (7) lies between 50 $\mu$m and 600 $\mu$m, preferably between 100 $\mu$m and 500 $\mu$m and particularly preferred between 100 $\mu$m and 250 $\mu$m, wherein the length (l) of the perforations (7) preferably are arranged along a desired tearing direction (8), and wherein a ratio of length (l) to width (b) preferably lies between 1.5 and 5, preferably between 1.7 and 3.5.

3.  A packaging (5) according to any of the claims 1 or 2, wherein the first layer (1) comprises polyethylene terephthalate (PET), polypropylene, polyamide and/or nylon and wherein the first layer (1) preferably comprises a biaxially or monoaxially oriented film.

4.  A packaging (5) according to any of the claims 1 to 3, wherein the thickness of the first layer (1) lies in a range between 8 and 30 $\mu$m, preferably between 12 and 23 $\mu$m.

5. A packaging (5) according to any of the claims 1 to 4, wherein the second layer (2) comprises an aluminium foil, preferably an aluminium foil having a thickness that lies in a range of between 6 $\mu$m and 40 $\mu$m, particularly preferred between 6.35 $\mu$m and 30 $\mu$m.

6. A packaging (5) according to any of the claims 1 to 5, wherein the second layer (2) comprises a layer of a polyolefin material, particularly polyethylene or polypropylene, or a hot sealable varnish, which provides the second outer surface (11).

7. A packaging (5) according to any of the claims 1 to 6, wherein the inner layer (3) comprises a wet or dry lamination adhesive or an extrusion lamination resin.

8. A packaging (5) according to any of the claims 1 to 7, wherein at least on weakening zone (6) is arranged in a continuous manner and wherein the weakening zone (6) is oriented longitudinally or transversally with regard to the machining direction (22) of a packaging production line.

9. A packaging (5) according to any of the claims 1 to 8, wherein at least one weakening zone (6) is arranged in a discontinuous manner and wherein the weakening zone (6) is oriented longitudinally or transversally with regard to the machining direction (23) of a packaging production line.

10. A packaging (5) according to any of the claims 1 to 9, wherein at least two weakening zones (6) are arranged, preferably in a symmetrical manner, on a front side and a backside of the Packaging (5).

11. A packaging (5) according to any of the claims 1 to 10, wherein the packaging (5) provides a push-through opening feature and a tear-open opening feature.

12. A packaging (5) according to any of the claims 1 to 11, wherein an opening feature is only accessible after at least a partial separation of one compartment of the packaging (5).

**Patentansprüche**

1. Verpackung (5), die geeignet ist, um als kindersichere und/oder seniorenfreundliche Verpackung verwendet zu werden, die unter Verwendung einer Verbundverpackungsfolie (4) hergestellt wird, wobei die Verpackung ein Portionstütchen (16), ein Stick-Pack (17), eine Strip-Pack (18), ein Schlauchbeutel (19) oder ein Standbodenbeutel (22) ist, wobei die Verbundverpackungsfolie (4) Folgendes umfasst:

- eine erste Schicht (1), die eine erste Außenoberfläche (11) und eine erste Innenoberfläche (10) aufweist, wobei die erste Schicht (1) der Verpackungsfolie (4) reißhemmende Eigenschaften verleiht,
- eine zweite Schicht (12), die eine zweite Außenoberfläche (21) und eine zweite Innenoberfläche (20) aufweist, wobei die zweite Außenberoberfläche (21) der zweiten Schicht (2) gegen eine Gegenoberfläche siegelfähig ist,
- eine innere Schicht (3), die zwischen der ersten Innenoberfläche (10) der ersten Schicht (1) und der zweiten Innenoberfläche (20) der zweiten Schicht (2) angeordnet ist,

wobei die Verpackungsfolie (4) zumindest eine Schwächungszone (6) aufweist, in der die reißhemmenden Eigenschaften der Verpackungsfolie (4) durch eine Mehrzahl an Perforationen (7), die in der ersten Schicht (1) vorhanden sind, verringert werden, wobei die Dichte von Perforationen (7) in der Schwächungszone (6) zwischen 50 und 250, bevorzugt zwischen 50 und 150 und insbesondere bevorzugt zwischen 70 und 130 Perforationen pro cm$^2$ liegt und wobei die wenigstens eine Schwächungszone (6) auf der Verpackung (5) angeordnet ist, um ein Durchdrücköffnungsmerkmal oder ein Aufreißöffnungsmerkmal bereitzustellen.

2. Verpackung (5) nach Anspruch 1, wobei in Schnittebenen parallel zu der ersten Außenoberfläche (11) der Verbundverpackungsfolie (4) die Querschnitte der Perforationen (7) eine längliche Form mit einer Länge (l) und einer Breite (b) aufweisen, wobei die Abmessung der Länge (l) größer ist als die Abmessung der Breite (b), insbesondere wobei eine maximale Länge (l) eines Querschnitts der Perforationen (7) zwischen 50 $\mu$m und 600 $\mu$m, bevorzugt zwischen 100 $\mu$m und 500 $\mu$m und insbesondere bevorzugt zwischen 100 $\mu$m und 250 $\mu$m liegt, wobei die Länge (l) der Perforationen (7) bevorzugt entlang einer gewünschten Reißrichtung (8) angeordnet sind und wobei ein Verhältnis von Länge (l) zu Breite (b) bevorzugt zwischen 1,5 und 5, höchst bevorzugt zwischen 1,7 und 3,5 liegt.

3. Verpackung (5) nach einem der Ansprüche 1 oder 2, wobei die erste Schicht (1) Polyethylenterephthalat (PET), Polypropylen, Polyamid und/oder Nylon umfasst und wobei die erste Schicht (1) bevorzugt einen biaxial oder monoaxial orientierten Film umfasst.

4. Verpackung (5) nach einem der Ansprüche 1 bis 3, wobei die Dicke der ersten Schicht (1) in einem Bereich zwischen 8 und 30 $\mu$m, bevorzugt zwischen 12 und 23 $\mu$m liegt.

**5.** Verpackung (5) nach einem der Ansprüche 1 bis 4, wobei die zweite Schicht (2) eine Aluminiumfolie, bevorzugt eine Aluminiumfolie, die eine Dicke aufweist, die in einem Bereich zwischen 6 $\mu$m und 40 $\mu$m, höchst bevorzugt zwischen 6,35 $\mu$m und 30 $\mu$m liegt, umfasst.

**6.** Verpackung (5) nach einem der Ansprüche 1 bis 5, wobei die zweite Schicht (2) eine Schicht aus einem Polyolefinmaterial, insbesondere Polyethylen oder Polypropylen, oder einen heißsiegelfähigen Lack umfasst, der die zweite Außenoberfläche (11) bereitstellt.

**7.** Verpackung (5) nach einem der Ansprüche 1 bis 6, wobei die Innenschicht (3) einen nassen oder einen trockenen Kaschierklebstoff oder ein Extrusionskaschierharz umfasst.

**8.** Verpackung (5) nach einem der Ansprüche 1 bis 7, wobei wenigstens eine Schwächungszone (6) kontinuierlich angeordnet ist und wobei die Schwächungszone (6) in Bezug auf die Bearbeitungsrichtung (22) einer Verpackungsproduktionslinie in Längsrichtung oder in Querrichtung ausgerichtet ist.

**9.** Verpackung (5) nach einem der Ansprüche 1 bis 8, wobei wenigstens eine Schwächungszone (6) diskontinuierlich angeordnet ist und wobei die Schwächungszone (6) in Bezug auf die Bearbeitungsrichtung (23) einer Verpackungsproduktionslinie in Längsrichtung oder in Querrichtung ausgerichtet ist.

**10.** Verpackung (5) nach einem der Ansprüche 1 bis 9, wobei wenigstens zwei Schwächungszonen (6), bevorzugt symmetrisch, auf einer Vorderseite und einer Rückseite der Verpackung (5) angeordnet sind.

**11.** Verpackung (5) nach einem der Ansprüche 1 bis 10, wobei die Verpackung (5) ein Durchdrücköffnungsmerkmal und ein Aufreißöffnungsmerkmal bereitstellt.

**12.** Verpackung (5) nach einem der Ansprüche 1 bis 11, wobei ein Öffnungsmerkmal nur nach wenigstens einer teilweisen Trennung eines Fachs der Verpackung (5) zugänglich ist.

**Revendications**

**1.** Emballage (5) adapté pour être utilisé comme emballage à l'épreuve des enfants et/ou adapté aux personnes âgées, fabriqué à l'aide d'une feuille d'emballage composite (4), l'emballage étant un sachet (16), un sachet tube (17), une dose en chapelet (18), un emballage tubulaire (19) ou un doypack (22), la feuille d'emballage composite (4) comprenant :

- une première couche (1) ayant une première surface extérieure (11) et une première surface intérieure (10), la première couche (1) conférant des propriétés d'inhibition de déchirure à la feuille d'emballage (4),
- une seconde couche (12) ayant une seconde surface extérieure (21) et une seconde surface intérieure (20), la seconde surface extérieure (21) de la seconde couche (2) pouvant être scellée contre une surface d'ajustement,
- une couche intérieure (3) disposée entre la première surface intérieure (10) de la première couche (1) et la seconde surface intérieure (20) de la seconde couche (2),

la feuille d'emballage (4) ayant au moins une zone d'affaiblissement (6) dans laquelle les propriétés d'inhibition de déchirure de la feuille d'emballage (4) sont réduites par une pluralité de perforations (7) qui sont présentes dans la première couche (1), la densité des perforations (7) dans la zone d'affaiblissement (6) étant comprise entre 50 et 250, de préférence entre 50 et 150 et particulièrement préférée entre 70 et 130 perforations par cm$^2$ et l'au moins une zone d'affaiblissement (6) étant disposée sur l'emballage (5) pour fournir un élément d'ouverture enfonçable ou un élément d'ouverture déchirable.

**2.** Emballage (5) selon la revendication 1, dans des plans de coupe parallèles à la première surface extérieure (11) de la feuille d'emballage composite (4), les sections transversales des perforations (7) ayant une forme allongée avec une longueur (1) et une largeur (b), la dimension de la longueur (l) étant plus grande que la dimension de la largeur (b), en particulier une longueur maximale (l) d'une section transversale des perforations (7) étant comprise entre 50 $\mu$m et 600 $\mu$m, de préférence entre 100 $\mu$m et 500 $\mu$m et particulièrement préférée entre 100 $\mu$m et 250 $\mu$m, la longueur (l) des perforations (7) étant de préférence disposée le long d'une direction de déchirement (8) souhaitée, et un rapport de la longueur (l) à la largeur (b) étant de préférence compris entre 1,5 et 5, de préférence entre 1,7 et 3,5.

**3.** Emballage (5) selon l'une quelconque des revendications 1 ou 2, la première couche (1) comprenant du polyéthylène téréphtalate (PET), du polypropylène, du polyamide et/ou du nylon et la première couche (1) comprenant de préférence un film orienté monoaxialement ou bi-axialement.

**4.** Emballage (5) selon l'une quelconque des revendications 1 à 3, l'épaisseur de la première couche (1) se situant dans une plage comprise entre 8 et 30 $\mu$m, de préférence entre 12 et 23 $\mu$m.

**5.** Emballage (5) selon l'une quelconque des revendications 1 à 4, la seconde couche (2) comprenant une feuille d'aluminium, de préférence une feuille d'aluminium ayant une épaisseur comprise entre 6 $\mu$m et 40 $\mu$m, particulièrement préférée entre 6,35 $\mu$m et 30 $\mu$m.

6. Emballage (5) selon l'une quelconque des revendications 1 à 5, la seconde couche (2) comprenant une couche d'un matériau polyoléfinique, en particulier du polyéthylène ou du polypropylène, ou un vernis scellable àchaud, qui fournit la seconde surface extérieure (11).

7. Emballage (5) selon l'une quelconque des revendications 1 à 6, la couche intérieure (3) comprenant un adhésif de stratification humide ou sec ou une résine de stratification par extrusion.

8. Emballage (5) selon l'une quelconque des revendications 1 à 7, au moins une zone d'affaiblissement (6) étant disposée de manière continue et lazone d'affaiblissement (6) étant orientée longitudinalement ou transversalement par rapport à la direction d'usinage (22) d'une ligne de production d'emballages.

9. Emballage (5) selon l'une quelconque des revendications 1 à 8, au moins une zone d'affaiblissement (6) étant disposée de manière discontinue et lazone d'affaiblissement (6) étant orientée longitudinalement ou transversalement par rapport à la direction d'usinage (23) d'une ligne de production d'emballages.

10. Emballage (5) selon l'une quelconque des revendications 1 à 9, au moins deux zones d'affaiblissement (6) étant disposées, de préférence de manière symétrique, sur une face avant et une face arrière de l'emballage (5).

11. Emballage (5) selon l'une quelconque des revendications 1 à 10, l'emballage (5) fournissant un élément d'ouverture enfonçable et un élément d'ouverture déchirable.

12. Emballage (5) selon l'une quelconque des revendications 1 à 11, dans lequel un élément d'ouverture n'est accessible qu'après au moins une séparation partielle d'un compartiment de l'emballage (5).

Fig. 1

Fig. 2

Fig. 3

Fig. 4a

Fig. 4b

Fig. 4c

Fig. 4c

Fig. 5a

Fig. 5b

Fig. 5c

Fig. 5d

Fig. 6a

Fig. 6b

Fig. 6c

Fig. 6d

Fig. 6e

Fig. 6f

Fig. 6g

Fig. 6h

6"

6'

5

6'

6"

6"

6'

6'

6"

6"'

18

Fig. 6i

12

15

13

6

23

39

19

Fig. 7a

12

6

12

Fig. 7b

6

6

Fig. 7c

6

6

Fig. 7d

## Fig. 8a

## Fig. 8b

## Fig. 9

Fig. 10

Fig. 11

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1345753 B1

- EP 2336044 A1